# EUROPÄISCHE PATENTSCHRIFT

(11) **EP 2 216 575 B1**
(45) Veröffentlichungstag und Bekanntmachung des Hinweises auf die Patenterteilung: **16.12.2015**
(21) Anmeldenummer: 10000973.7
(22) Anmeldetag: 01.02.2010
(51) Int. Cl.: F16L 3/12, F16L 3/015

(54) **Befestigungselement, Vorrichtung sowie Verfahren zum Befestigen eines flexiblen Rohres**
Fastening element, device and method for fastening a flexible tube
Elément de fixation, dispositif ainsi que procédé de fixation d'un tuyau flexible

(30) Priorität: 06.02.2009 DE 102009008684
(43) Veröffentlichungstag der Anmeldung: 11.08.2010
(73) Patentinhaber: MAICO Elektroapparate-Fabrik GmbH, 78056 Villingen-Schwenningen (DE)
(72) Erfinder: Kammerer, Stephan, 78052 VS-Pfaffenweiler (DE)
(74) Vertreter: Grosse, Rainer

(56) Entgegenhaltungen:
- EP-A1- 0 575 218
- EP-A2- 1 178 251
- WO-A1-2006/134266
- FR-A1- 2 663 398
- US-A- 4 641 478
- US-A- 5 211 602
- US-A1- 2008 035 799
- US-B1- 6 409 223

## Beschreibung

Die Erfindung betrifft ein Befestigungselement, eine Vorrichtung sowie ein Verfahren zum Befestigen eines flexiblen Rohres, insbesondere eines flexiblen Wellrohres, an einem Gegenstand, insbesondere einer Wand, Decke oder dergleichen, mit einer Rohrbefestigung.

Befestigungselemente, Vorrichtungen und Verfahren der eingangs genannten Art sind dem Fachmann seit Langem bekannt, sieche z.B. US 6 409 223, WO 2006/134 266, US 2008/0035799. Bei der Verlegung von flexiblen Rohren, beispielsweise von Lüftungsrohren in Gebäuden, werden Befestigungselemente dazu verwendet, das flexible Rohr beispielsweise entlang einer Wand in gewünschter Art und Weise zu führen und zu halten. Das wohl bekannteste Befestigungselement stellt die sogenannte Rohrschelle dar, welche im Wesentlichen aus zwei das Rohr umschließenden ringsegmentförmigen Blechteilen besteht. Eines der Blechteile wird zunächst an dem Gegenstand beziehungsweise an der Wand derart montiert, dass das ringsegmentförmige Blechteil eine Rohraufnahme bildet, in die das Rohr eingelegt werden kann. Die Blechteile weisen jeweils an einem ersten freien Ende Verbindungsmittel auf, die ein formschlüssiges Verbinden der Blechteile miteinander an den freien Enden erlaubt, wobei in der Regel das eine Blechteil an dem bereits an der Wand befestigten Blechteil einendig derart angeordnet werden kann, dass die Rohraufnahme frei zugänglich bleibt. Anschließend wird das Rohr in die Rohraufnahme eingelegt, das zweite Blechteil derart umgelegt, dass sein zweites freies Ende dem zweiten freien Ende des an der Wand befestigten Blechteils gegenüberliegt und mit diesen mittels einer Verschraubung verbunden. Durch Festziehen der Verschraubung wird das Rohr in der Rohrschwelle eingespannt beziehungsweise befestigt. Hierbei wird also eine Rohrbefestigung durch das Verschrauben des zweiten Blechteils an dem ersten Blechteil gebildet.

Die bekannten Befestigungselemente haben den Nachteil, dass ein Monteur bei der Montage das Rohr halten, das zweite Blechteil zum Schließen der Rohrschelle umlegen, ausrichten und an dem anderen Blechteil festschrauben muss. Für einen einzelnen Monteur ist dies mitunter mühsam und kompliziert. Darüber hinaus können sich die Rohrschellen an dem Gegenstand beziehungsweise an der Wand leicht verdrehen, da sie mit nur einer einzigen Schraubverbindung an der Wand festgemacht sind, sodass sie leicht um die Achse der Schraubverbindung verdreht werden können. Insbesondere bei einer Richtungsänderung des zu verlegenden Rohres, beispielsweise wenn das Rohr einer bestimmten Kurvenbahn folgend an dem Gegenstand beziehungsweise an der Wand befestigt werden soll, führt dies schnell zu Problemen.

Der Erfindung liegt somit die Aufgabe zugrunde, ein Befestigungselement, eine Vorrichtung sowie ein Verfahren zum Befestigen eines flexiblen Rohres an einem Gegenstand zu erschaffen, das auf einfache und kostengünstige Art und Weise ein einfaches Befestigen des Rohres erlaubt.

Diese Aufgabe wird erfindungsgemäß durch die Ausbildung des Befestigungselements als ein mindestens zwei Schenkel aufweisendes Winkelelement gelöst, wobei die Rohrbefestigung als randoffene Ausnehmung mit einem ein Hintergreifen des Durchmessers des Rohres ermöglichenden Hinterschnitt in mindestens einem der Schenkel ausgebildet ist. Zunächst einmal ist also ein Winkelelement vorgesehen, das mindestens zwei Schenkel aufweist. Dies ist einfach und kostengünstig herstellbar. In einem der Schenkel ist dabei eine randoffene Ausnehmung ausgebildet, die als Rohrbefestigung dient. In die randoffene Ausnehmung kann das flexible Rohr radial - im Bezug auf das Rohr - eingebracht werden. Die Ausnehmung weist dabei einen Hinterschnitt auf, der ein Hintergreifen des Durchmessers des Rohres ermöglicht. Unter dem Hinterschnitt ist hierbei eine Ausbildung der Ausnehmung derart zu verstehen, dass die Ausnehmung zweckmäßigerweise im Randbereich eine Verjüngung aufweist, sodass in Montagerichtung gesehen, die Ausnehmung zumindest hinter der Verjüngung breiter ausgebildet ist. Der Hinterschnitt ist dabei derart ausgebildet, dass er ein Hintergreifen des Durchmessers des Rohres ermöglicht, was bedeutet, dass ein in die Ausnehmung eingebrachtes Rohr bereichsweise von dem Hinterschnitt hintergriffen wird. Um das Rohr in die Rohrbefestigung beziehungsweise in die Ausnehmung einzubringen, wird es radial in die Ausnehmung eingebracht, wobei aufgrund des Hinterschnitts der Querschnitt des flexiblen Rohres zunächst elastisch verformt wird, sodass das Rohr durch den durch die Verjüngung verengten Eingangsbereich hindurch gelangt. Nach Passieren des Hinterschnitts beziehungsweise der Verjüngung entspannt sich das flexible Rohr, sodass es seine ursprüngliche Querschnittsform zumindest im Wesentlichen zurück erhält. Mit anderen Worten wird das Rohr in die randoffene Ausnehmung eingeklipst. Aufgrund des vorteilhaften Hinterschnitts kann das Rohr sich nicht ohne Weiteres von der Rohrbefestigung lösen. Dadurch wird das Befestigen des flexiblen Rohres wesentlich vereinfacht. Ein Monteur muss nunmehr lediglich zunächst das Winkelelement mit dem die Ausnehmung nicht aufweisenden Schenkel an dem Gegenstand befestigen und kann anschließend auf einfache Art und Weise das flexible Rohr in die randoffene Ausnehmung einklipsen, sodass der Hinterschnitt das Rohr hintergreift. Das Rohr kann somit mit wenigen Montageschritten einfach und sicher an dem Gegenstand befestigt werden.

Zweckmäßigerweise ist der die Ausnehmung aufweisende erste Schenkel senkrecht oder im Wesentlichen senkrecht zu dem zweiten Schenkel angeordnet, sodass das Rohr parallel zu dem Gegenstand geführt werden kann und sicher in der Ausnehmung einliegt.

In der Regel weisen zu verlegende flexible Rohre einen kreisförmigen Querschnitt auf. Vorteilhafterweise ist daher die Ausnehmung im Wesentlichen kreisförmig ausgebildet, sodass die Kontur der Ausnehmung im Wesentlichen der des zu befestigenden Rohres entspricht, wodurch ein sicherer Halt gewährleistet wird. Alternativ ist es bevorzugt denkbar, die Ausnehmung ovalförmig auszubilden, sodass auch Rohre mit einem im Wesentlichen ovalen Querschnitt sicher in der Ausnehmung gehalten werden können. Prinzipiell ist jedoch auch jede andere beliebige Querschnittsform der Ausnehmung denkbar, sofern sie einen Hinterschnitt - wie oben beschreiben - aufweist. So muss auch die Form der Aussparung nicht unbedingt der Querschnittsform des Rohres entsprechen.

Bevorzugt ist in dem zweiten Schenkel mindestens eine, vorzugsweise mehrere Öffnungen für eine Schraube oder dergleichen ausgebildet. Die Schraube kann dann in den Gegenstand beziehungsweise in die Wand oder in einen in der Wand vorgesehenen Dübel eingeschraubt, und somit das Winkelelement beziehungsweise das Befestigungselement an dem Gegenstand befestigt werden. Sind zwei Öffnungen vorgesehen, kann darüber hinaus auch die Ausrichtung des Befestigungselements an dem Gegenstand genau definiert werden. Ein Verdrehen des Befestigungselements bei der Montage des Rohres ist dann nicht mehr möglich, wodurch insbesondere die Montage eines Rohres entlang einer Krümmung beziehungsweise Kurve vereinfacht wird.

Nach einer Weiterbildung der Erfindung ist ein dritter Schenkel vorgesehen, der als Seitenschenkel ausgebildet ist und mindestens eine Öffnung für eine Schraube oder dergleichen aufweist. Der dritte Schenkel ist somit seitlich angeordnet und geht bevorzugt entweder von dem ersten, die Rohrbefestigung aufweisenden Schenkel oder aber von dem zweiten Schenkel aus. Bei der Montage des Befestigungselements an dem Gegenstand kann somit die Ausrichtung der Rohrbefestigung beziehungsweise der Ausnehmung je nach Bedarfsfall variiert werden. So kann vorgesehen sein, dass die Ausrichtung der Ausnehmung vertikal oder horizontal ist. So kann beispielsweise das gleiche Befestigungselement sowohl für die Befestigung des Rohres an einer Decke als auch an einer senkrecht dazu verlaufenden beziehungsweise ausgerichteten Wand verwendet werden, wobei das Rohr stets sicher in der randoffenen Ausnehmung gehalten ist.

Vorteilhafterweise ist mindestens eine der Öffnungen langlochartig ausgebildet. Bei der Montage des Befestigungselements an dem Gegenstand können zuerst Löcher in die das Befestigungselement haltende Wand gebohrt werden. Häufig sind derartige Löcher jedoch nicht ausreichend genau in die Wand einbringbar, sodass mittels der langlochartig ausgebildeten Öffnung eine Nachjustage des Befestigungselements vorgenommen werden kann. Unter bestimmten Voraussetzungen ist ein derartiges Nachjustieren der Ausrichtung beziehungsweise Anordnung des Befestigungselements an dem Gegenstand auch noch nach Einbringen des flexiblen Rohres in die Rohrbefestigung möglich.

Nach einer Weiterbildung der Erfindung weist das Winkelelement mindestens eine beidseitige Einkerbung, insbesondere im Biegebereich, insbesondere zwischen dem ersten und dem zweiten Schenkel, für ein das Rohr umgreifendes schlauchförmiges Haltemittel auf. Das Winkelelement weist somit zwischen dem ersten und dem zweiten Schenkel beidseitige Einkerbungen auf. Bei der Montage kann ein schlaufenförmiges Haltemittel, wie zum Beispiel ein Draht oder eine Schnur oder auch ein Kabelbinder, um das Rohr und den ersten Schenkel herum geführt werden, wobei es zur Sicherung in die Einkerbungen eingelegt beziehungsweise durch diese hindurchgeführt wird. Die Einkerbungen bieten somit einen sicheren Halt für das das Rohr zusätzlich haltende Haltemittel.

Zusätzlich oder alternativ ist vorteilhafterweise vorgesehen, dass in dem zweiten Schenkel wenigstens eine Befestigungslasche für ein schlaufenförmiges Haltemittel, insbesondere für einen Kabelbinder oder dergleichen, angeordnet ist. Vorzugsweise ist die Befestigungslasche nahe zu dem ersten Schenkel angeordnet, sodass das schlaufenförmige Haltemittel um das Rohr und den ersten Schenkel herum und in die Befestigungslasche eingehakt werden kann. Hierdurch kann das Rohr auf einfache Art und Weise dauerhaft an dem Befestigungselement sicher arretiert werden.

Vorteilhafterweise ist die Befestigungslasche als aus dem zweiten Schenkel heraus gebogene Befestigungszunge ausgebildet. Vorzugsweise wird die Befestigungszunge dazu bei der Herstellung des Winkelelements zunächst aus dem vollen Material insbesondere dreiseitig freigeschnitten und dann entsprechend herausgebogen. Zweckmäßigerweise ist das freie Ende der Befestigungszunge von dem ersten Schenkel wegweisend ausgerichtet, sodass das Rohr beziehungsweise das schlaufenförmige Haltemittel sicher daran gehalten werden kann.

Nach einer Weiterbildung der Erfindung ist das Material des Winkelelements im Wesentlichen so dick wie ein Wellenzwischenraum des Wellrohres ausgebildet. Mit anderen Worten entspricht die Höhe eines Querschnitts durch das Winkelelement im Wesentlichen dem Raum, der zwischen zwei benachbarten Wellen des Wellrohres ausgebildet ist. Wird nun das Wellrohr derart in das Befestigungselement beziehungsweise in die in dem ersten Schenkel ausgebildete Ausnehmung eingebracht, dass der Hinterschnitt der Ausnehmung den Durchmesser des Wellenzwischenraumes hintergreift, das Winkelelement also zwischen zwei benachbarten Wellen des Wellenrohres liegt, so entsteht zwischen dem Winkelelement und dem Wellrohr eine Axialsicherung. Somit kann das Wellrohr nur radial aus der Ausnehmung herausgenommen werden. Ein Durchziehen des Wellrohres in axialer Richtung wird wirksam durch die mit dem ersten Schenkel zusammenwirkenden Wellen des Wellrohres verhindert. Dies wirkt sich insbesondere vorteilhaft auf die Montage eines einer Kurvenbahn folgenden Wellrohres aus. Entspricht die Dicke des Materials des Winkelelements im Wesentlichen dem Wellenzwischenraum, so kann das Wellrohr auch spielfrei (axial) in der Ausnehmung gehalten werden.

Nach einer vorteilhaften Weiterbildung der Erfindung ist an einem dem ersten Schenkel gegenüberliegenden Ende des zweiten Schenkels ein weiterer beziehungsweise vierter Schenkel vorgesehen, der dem ersten Schenkel entspricht, also ebenfalls die erfindungsgemäße Rohrbefestigung aufweist. Vorteilhafterweise ist das Winkelelement dabei im Wesentlichen U-förmig ausgebildet, sodass der erste und der vierte Schenkel miteinander fluchten, wodurch eine doppelte Rohrbefestigung an dem einen Befestigungselement geboten wird. Der dritte Schenkel ist optional.

Bevorzugt ist der zweite Schenkel zumindest bereichsweise derart gebogen, dass der erste und der vierte Schenkel in einem Winkel, insbesondere senkrecht zueinander ausgerichtet sind. Der zweite beziehungsweise mittlere Schenkel ist somit um einen bestimmen Winkel gebogen, besonders bevorzugt weist er eine Biegekante auf. Typischerweise sind die Schenkel eines Winkelelements selbst eben ausgebildet und weisen nur an ihrem dem benachbarten Schenkel zugeordneten Ende eine entsprechende Biegekante auf. Ist nun der zweite Schenkel wie oben beschrieben gebogen, so kann das Befestigungselement als Winkel-Befestigungselement beziehungsweise Kurvenbefestigungselement verwendet werden. Durch die vorgegebene Ausrichtung der beiden die Rohrbefestigung aufweisenden Schenkel (erster und dritter Schenkel) wird dem Rohr beziehungsweise dem Wellrohr ein bestimmter Winkel beziehungsweise Radius vorgegeben. Ein derartiges Winkel-Befestigungselement kann beispielsweise beim Übergang von einer Decke zu einer senkrecht dazu verlaufenden Wand verwendet werden.

Mit Vorteil ist vorgesehen, dass das Winkelelement als Winkelblech ausgebildet ist. Somit ist eine stabile und belastbare Rohrbefestigung möglich.

Insbesondere kann das Befestigungselement als Stanz-Biege-Teil ausgebildet sein. Dazu wird das Winkelelement beziehungsweise das Winkelblech zunächst aus einem ebenen Blechteil herausgeschnitten oder gestanzt und anschließend werden die Schenkel in die gewünschte Ausrichtung beziehungsweise das Winkelelement in die gewünschte Form gebogen. Dies kann besonders vorteilhaft in einem einzigen Bearbeitungsschritt geschehen, sodass das Befestigungselement besonders einfach und kostengünstig herstellbar ist.

Die erfindungsgemäße Vorrichtung kennzeichnet sich durch mindestens zwei Befestigungselemente aus, die wie oben beschrieben ausgebildet sind, und mittels eines Drehgelenks drehgelenkig miteinander verbunden sind. Bei der Befestigung von Rohren, insbesondere von Wellrohren, steht man häufig vor dem Problem, dass das Rohr um Ecken und Winkel gelegt beziehungsweise geführt werden muss, die keiner Norm entsprechen und somit beispielsweise das oben beschriebene Befestigungselement mit dem ersten, dem zweiten und dem vierten Schenkel nicht verwendbar wäre. Die erfindungsgemäße Vorrichtung bietet somit mittels des Drehgelenks drehgelenkig miteinander verbundene Befestigungselemente, wobei der Winkel entweder voreingestellt oder durch den Monteur vor Ort einstellbar ist. Das Drehgelenk erlaubt das einfache Anpassen und insbesondere gegebenenfalls ein stufenloses Anpassen der Ausrichtung der Befestigungselemente zueinander, sodass die Vorrichtung an jeden Bedarfsfall anpassbar ist.

Zweckmäßigerweise ist das Drehgelenk an einem dem jeweiligen ersten Schenkel gegenüberliegenden Endes des zweiten Schenkels angeordnet. In diesem Fall weisen die Befestigungselemente zweckmäßigerweise jeweils nur einen die erfindungsgemäße Rohrbefestigung aufweisenden (ersten) Schenkel auf, sodass die Befestigungselemente selbst im Wesentlichen L-förmig ausgebildet sind. An dem zu der Rohrbefestigung fernen Ende des jeweiligen Befestigungs- beziehungsweise Winkelelements ist das Drehgelenk vorgesehen. Je nach Ausbildung des Drehgelenks können die Befestigungselemente scherenartig zueinander verschränkt beziehungsweise verdreht werden, sodass die Befestigungselemente in einer Ebene zueinander verlagerbar sind, oder entlang einer Kante derart zueinander geklappt werden, dass beispielsweise die Vorrichtung eine W-Form (mit im Wesentlichen rechten Winkeln) erhält.

Bevorzugt wird das Drehgelenk von einer die aufeinanderliegenden zweiten Schenkel miteinander verbindenden Blindniete gebildet. Es ist also vorgesehen, dass zunächst die beiden zweiten Schenkel der beiden Befestigungselemente aufeinander aufliegen. Die die beiden zweiten Schenkel miteinander verbindende Blindniete bildet daher eine besonders einfache und kostengünstige Möglichkeit eine Winkeleinstellung zwischen den beiden Befestigungselementen zu gewährleisten. Die Blindniete definiert dabei eine Drehachse, um die die Befestigungselemente geschwenkt werden können.

Nach einer vorteilhaften Weiterbildung der Erfindung weist jeder der zweiten Schenkel mindestens eine Einstellschraubenöffnung auf einem koaxial zu der Drehachse des Drehgelenks beziehungsweise der Blindniete ausgerichteten - gedachten - Kreis auf. Die Einstellschraubenöffnung des jeweiligen Schenkels befindet sich also auf einem (gedachten) Kreis um die Drehachse des Drehgelenks, sodass wenn die Befestigungselemente zueinander verdreht beziehungsweise verschwenkt werden die Einstellschraubenöffnungen der beiden Schenkel in einer bestimmten Position der Schenkel zueinander miteinander fluchten.

Weist nun vorteilhafterweise wenigstens einer der Schenkel mehrere auf dem Radius verteilt angeordnete Einstellschraubenöffnungen auf, so kann die Vorrichtung in einer bestimmten Winkelposition der Befestigungselemente zueinander durch Einfügen einer Einstellschraube oder eines Einstellstifts arretiert werden. Zweckmäßigerweise sind in der oder den Einstellschraubenöffnungen eines der Schenkel Gewinde ausgebildet, in die die Einstellschraube eingeschraubt werden kann. Je nach Anzahl und Winkelabstand zueinander sind dabei unterschiedlich viele und unterschiedlich große Einstellwinkel zwischen den Befestigungselementen festlegbar beziehungsweise Einstellbar.

Besonders bevorzugt weist der oben liegende zweite Schenkel zwei Einstellschraubenöffnungen und der unten liegende zweite Schenkel mindestens zwei Einstellschraubenöffnungen auf. Zweckmäßigerweise weist der unten liegende zweite Schenkel eine Vielzahl von Einstellschraubenöffnungen auf. Zweckmäßigerweise sind vorzugsweise dabei die Einstellschraubenöffnungen beider zweiter Schenkel gleich beabstandet jeweils über zumindest einen Winkelbereich auf dem Kreis angeordnet. Das bedeutet, dass die Einstellschraubenöffnungen eines zweiten Schenkels den gleichen Abstand beziehungsweise Winkelabstand zueinander aufweisen. Wird nun bei dem oben liegenden Schenkel eine Einstellschraube in eine der beiden Einstellschraubenöffnungen eingebracht, dient die zweite in dem oben liegenden zweiten Schenkel ausgebildete Einstellschraubenöffnungen als optische Hilfe beim Einstellen des Winkels zwischen den beiden Befestigungselementen. Aufgrund des gleichen Abstandes der Einstellschraubenöffnungen zueinander kann davon ausgegangen werden, dass wenn durch die als optische Hilfe dienende zweite Einstellschraubenöffnung eine darunter liegende Einstellschraubenöffnung fluchtet, auch eine weitere Einstellschraubenöffnung des darunter liegenden zweiten Schenkels mit der Einstellschraubenöffnung fluchtet in der die Einstellschraube einliegt. Dadurch wird die Montage für den Monteur erleichtert und Fehler werden vermieden. Weiterhin ist es denkbar, zumindest eine der Einstellschraubenöffnungen in dem oben liegenden zweiten Schenkel als Langloch auszubilden, sodass eine stufenlose Winkeleinstellung zwischen dem Befestigungselement möglich ist.

Zweckmäßigerweise sind die dritten Schenkel der Befestigungselemente, sofern sie vorgesehen sind, auf derselben Seite der Vorrichtung angeordnet. Dadurch kann die Vorrichtung beispielsweise derart an einer Ecke einer Wand angeordnet werden, dass sie mittels der Seitenschenkel an der Wand befestigbar ist und ein Rohr in die Rohrbefestigung von oben einbringbar ist. Hierbei ergeben sich natürlich noch weitere Möglichkeiten, auf die jedoch später näher eingegangen werden soll.

Das erfindungsgemäße Leitungssystem für flüssige und/oder gasförmige Stoffe, durch das natürlich beispielsweise auch Kabel geführt werden können, ist **dadurch gekennzeichnet, dass** das Befestigungselement und/oder die Vorrichtung zum Befestigen eines flexiblen Rohres wie oben beschrieben ausgebildet sind. Dem Fachmann erlaubt dies eine besonders einfache und schnelle Montage des flexiblen Rohres auch an schwierigen Stellen, wie zum Beispiel dem Übergang von einer Wand zu einer Dachschräge.

Bevorzugt ist das Rohr als Wellrohr ausgebildet. Vorzugsweise entspricht die Kontur der Ausnehmung des Befestigungselements im Wesentlichen dem Querschnitt des Wellrohres in einem Wellenzwischenraum. Dadurch liegt das Wellrohr im in die Ausnehmung eingebrachten und damit entspannten Zustand an der Innenseite der Ausnehmung flächig an, wodurch beispielsweise Klappergeräusche oder Ähnliches verhindert werden. Darüber hinaus ist ein sicherer Halt des Wellrohres in der Rohrbefestigung gewährleistet.

Vorteilhafterweise ist der Querschnitt des Wellrohres im Wesentlichen kreisringförmig oder ovalringförmig ausgebildet. Entsprechend wird die Kontur der Ausnehmung wie oben beschrieben gewählt. Zweckmäßigerweise ist der Durchmesser der Ausnehmung nur geringfügig größer als der des Wellenzwischenraums, sodass einerseits ein sicherer Halt gewährleistet wird und andererseits die Materialien des Wellrohres und/oder des Befestigungs- beziehungsweise Winkelelements nicht dauerhaft belastet werden. Alternativ können (Well-)Rohr und/oder Rohrbefestigung zur Erzeugung einer Presspassung ausgebildet sein.

Bevorzugt entspricht die Dicke des Materials des Winkelelements im Wesentlichen der Breite eines Wellenzwischenraums des Wellrohres. Dies führt zu den oben bereits beschriebenen Vorteilen.

Schließlich ist vorzugsweise vorgesehen, dass mindestens ein schlaufenförmiges Haltemittel, insbesondere ein Kabelbinder, Draht oder dergleichen vorgesehen ist, das das Rohr umgreift und mit den Einkerbungen und/oder mit der Befestigungslasche zusammenwirkt. Das Haltemittel kann als zusätzliches Sicherungselement angebracht werden, um beispielsweise bei besonders schweren Rohren oder schwer belasteten Rohren ein Lösen von der Vorrichtung beziehungsweise von dem Befestigungselement zu verhindern.

Das erfindungsgemäße Verfahren sieht vor, dass das Rohr im Wesentlichen radial in die Ausnehmung unter elastischer Verformung des Rohrquerschnitts eingebracht wird, sodass sich das vollständig in die Ausnehmung eingebrachte Rohr aufgrund seiner Eigenelastizität in seine Ausgangsform zurückverformt und dadurch der Hinterschnitt der Ausnehmung den Durchmesser des Rohres hintergreift. Mit anderen Worten ist vorgesehen, dass das Rohr in die Ausnehmung eingeklipst wird.

Im Folgenden soll die Erfindung anhand mehrerer Ausführungsbeispiele nach den Figuren 9 - 12 näher erläutert werden. Dazu zeigen
- Figuren 1 bis 3: ein erstes nicht erfindungsgemäßes Ausführungsbeispiel eines vorteilhaften Befestigungselements,
- Figur 4: ein zweites nicht erfindungsgemäßes Ausführungsbeispiel des Befestigungselements,
- Figur 5: ein drittes nicht erfindungsgemäßes Ausführungsbeispiel des Befestigungselements für ein ovales Rohr,
- Figur 6: ein viertes nicht erfindungsgemäßes Ausführungsbeispiel des Befestigungselements für ein ovales Rohr,
- Figur 7: eine erste nicht erfindungsgemäße zusätzliche Befestigungsmöglichkeit,
- Figur 8: eine zweite nicht erfindungsgemäße zusätzliche Befestigungsmöglichkeit,
- Figur 9: ein erstes Ausführungsbeispiel einer erfindungsgemäßen Vorrichtung zum Befestigen eines Rohres,
- Figur 10: eine Rückenansicht der erfindungsgemäßen Vorrichtung,
- Figur 11: eine Seitenansicht der Vorrichtung und
- Figur 12: ein Ausführungsbeispiel eines erfindungsgemäßen Leitungssystems.

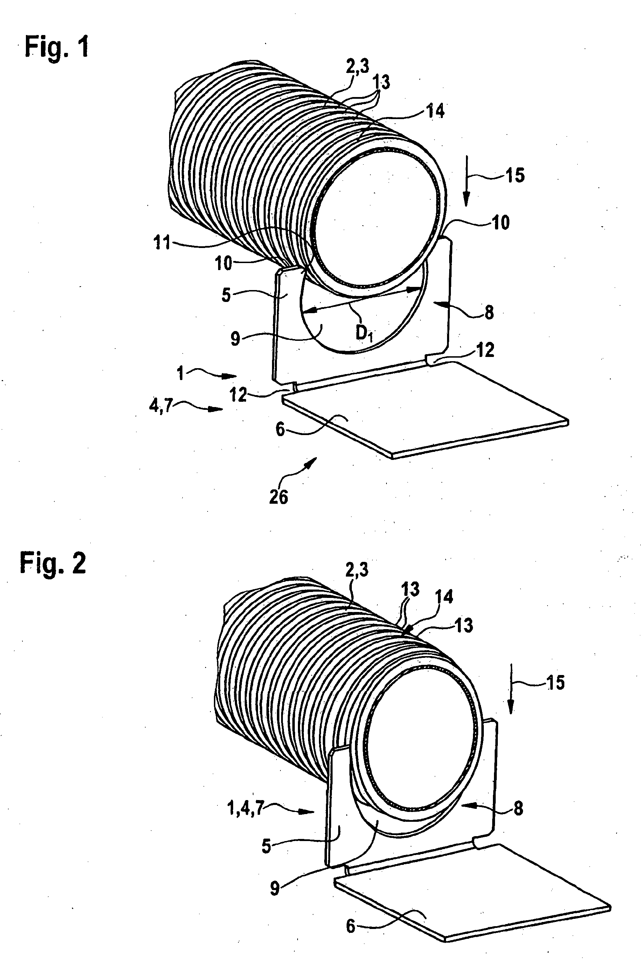

Die Figuren 1 bis 3 zeigen jeweils in einer perspektivischen Darstellung ein Befestigungselement 1 zum Befestigen eines flexiblen Rohres 2, das hier als ein flexibles Wellrohr 3 ausgebildet ist, wobei die drei Figuren den Befestigungsvorgang des Wellrohres 3 an dem Befestigungselement 1 wiedergeben.

Das Befestigungselement 1 ist als ein Winkelelement 4 ausgebildet, welches zwei Schenkel 5, 6 aufweist, die im Wesentlichen senkrecht zueinander angeordnet sind. Die Schenkel 5, 6 selbst sind dabei eben ausgebildet. Zweckmäßigerweise ist das Winkelelement als ein Winkelblech 7 ausgebildet, sodass der Winkel zwischen den beiden Schenkeln 5 und 6 auf einfache Art und Weise mittels Biegen beziehungsweise Umformen erstellbar ist.

Das Befestigungselement 1 weist weiterhin eine Rohrbefestigung 8 auf, die zum Befestigen des Rohres 2 an dem Befestigungselement 1 dient. Vorteilhafterweise ist die Rohrbefestigung 8 als eine randoffene Ausnehmung 9 in dem ersten Schenkel 5 ausgebildet. Die Ausnehmung 9 ist zu einem Rand des Winkelelements 4 beziehungsweise des Schenkels 5 hin offen ausgebildet. Weiterhin ist die Ausnehmung 9 in Richtung der Längserstreckung des Winkelelements 4 ausgerichtet. In dem vorliegenden Ausführungsbeispiel weist die Ausnehmung 9 eine im Wesentlichen kreisförmige Kontur auf, wobei der Mittelpunkt des Kreises innerhalb des ersten Schenkels 5 liegt, sodass sich die Ausnehmung 9 zu dem Rand 10 des Schenkels 5, zu dem die Ausnehmung 9 offen ausgebildet ist, verjüngt und einen Hinterschnitt 11 bildet. Weiterhin weist das Befestigungselement 1 beziehungsweise das Winkelelement 4 im Biegebereich zwischen den beiden Schenkeln 5 und 6 eine beidseitige Einkerbung 12 auf, auf die später näher eingegangen werden soll.

Das flexible Wellrohr 3, das hier geschnitten dargestellt ist, weist einen wellenförmigen Längsschnitt auf, wobei sich die "Wellen" 13 in dem vorliegenden Ausführungsbeispiel ringförmig jeweils einmal über den gesamten Umfang des Rohres 2 erstrecken und gleichmäßig beabstandet zueinander über das Rohr 2 verteilt angeordnet sind. Alternativ können die Wellen 13 des Wellrohres 3 auch schräg angeordnet oder sogar schrauben- beziehungsweise gewindeförmig ausgebildet sein. Zwischen zwei benachbarten Wellen 13 ist jeweils ein Wellenzwischenraum 14 gebildet, dessen Außendurchmesser kleiner als der der Wellen 13 ist. Vorteilhafterweise entspricht der Durchmesser D₁ der randoffenen Ausnehmung 9 im Wesentlichen dem Durchmesser des Wellrohres 3 in einem Wellenzwischenraum 14.

Im Folgenden soll nun das Befestigen des Wellrohres 3 an dem vorteilhaften Befestigungselement 1 anhand der Figuren 1 bis 3 erläutert werden. Die Figur 1 zeigt das Wellrohr 3 vor dem Einbringen in die randoffene Ausnehmung 9. Zunächst wird das Wellrohr in Richtung eines Pfeils 15 radial derart in die Ausnehmung 9 eingebracht, bis es mit einem Wellenzwischenraum 14 beidseitig auf dem Rand 10 des ersten Schenkels 5 aufliegt. Aufgrund des Hintergriffs ist die radiale Eintrittsöffnung schmaler ausgebildet als der Durchmesser D1, sodass das Wellrohr 3 nicht ohne Weiteres in die Ausnehmung 9 einbringbar ist.

Wird das Wellrohr 3 jedoch wie in der Figur 2 dargestellt weiter in die Ausnehmung 9 hineingedrückt, so wird sein Querschnitt aufgrund seiner flexiblen Ausbildung an die Weite der radialen Eintrittsöffnung der randoffenen Ausnehmung 9 angepasst. Mit anderen Worten wird das Wellrohr 3 unter elastischer Verformung des Wellrohrs 3 in die Ausnehmung 9 hineingequetscht. Wie in der Figur 2 dargestellt, erhält das Wellrohr 3 in diesem Zustand einen ovalen Querschnitt.

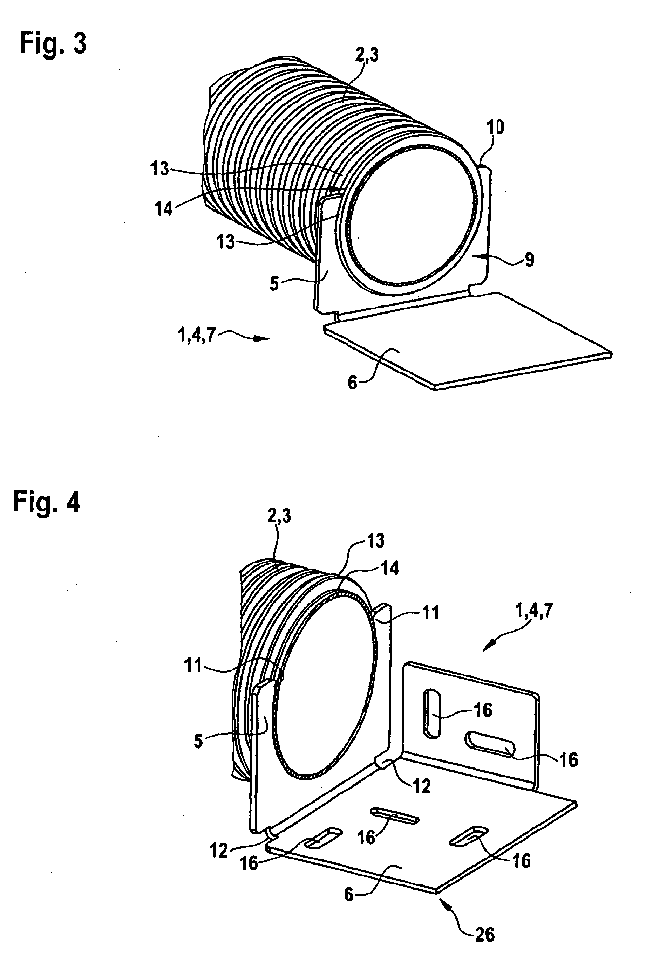

Wird das Wellrohr 3 vollständig in die Ausnehmung 9 in Richtung des Pfeils 15 eingebracht, so nimmt das Wellrohr 3 aufgrund seiner Eigenelastizität seine Ursprungs-(Querschnitts-)Form ein und liegt, wie in der Figur 3 dargestellt, im Wesentlichen entspannt in der Ausnehmung 9. Aufgrund der Zurückverformung hintergreift der Hinterschnitt 11 das Wellrohr 3. Das Wellrohr 3 kann sich nunmehr nicht ohne Weiteres aus der Ausnehmung 9 beziehungsweise aus der Rohrbefestigung 8 lösen. Vielmehr ist der gleiche Kraftaufwand wie beim Einbringen des Wellrohres 3 in die Ausnehmung entgegen der Richtung gemäß Pfeil 15 aufzubringen. Im voll eingebrachten Zustand entspricht der Durchmesser des Wellenzwischenraums 14 des Wellrohres 3 im Wesentlichen dem Durchmesser D₁ der Ausnehmung 9. Mit anderen Worten wird das Wellrohr 3 in die Rohrbefestigung beziehungsweise in die Ausnehmung 9 unter elastischer Verformung eingeklipst.

Im Vergleich zu den ansonsten verwendeten Rohrschellen, wird dadurch die Montage des Wellrohres 3 erheblich vereinfacht, da der Monteur das Wellrohr 3 lediglich in die Ausnehmung 9 einklipsen muss. Ein umständliches Hinzufügen eines zweiten Befestigungselements bei gleichzeitigem Halten des Wellrohres 3 entfällt. Darüber hinaus wird durch die vorteilhafte Ausbildung des Befestigungselements 1 eine Axialsicherung gewährleistet: Da der erste Schenkel 5 zwischen zwei benachbarten Wellen 13 des Wellrohres 3 einliegt, kann letzteres nicht axial in der Ausnehmung 9 verlagert werden.

Die Figur 4 zeigt ein zweites Ausführungsbeispiel des vorteilhaften Befestigungselements 1 in einer perspektivischen Darstellung. Dabei ist das Wellrohr 3 derart geschnitten dargestellt, dass zu erkennen ist, wie das Wellrohr 3 mit seinem Wellenzwischenraum 14 in der Ausnehmung 9 einliegt und durch den Hintergriff 11 in der Ausnehmung 9 beziehungsweise der Rohrbefestigung 8 gehalten wird.

Vorteilhafterweise sind in dem zweiten Schenkel 6 mehrere Öffnungen 16 ausgebildet, im vorliegenden Fall drei Öffnungen 16, durch die zur Befestigung des Befestigungselements 1 an einem Gegenstand, wie zum Beispiel an einer Wand, einer Decke oder dergleichen, eine Schraube, ein Nagel oder Ähnliches durchführbar ist. In dem vorliegenden Ausführungsbeispiel sind die Öffnungen 16 vorteilhafterweise langlochartig ausgebildet, sodass eine Nachjustierung des Befestigungselements 1 durchgeführt werden kann.

Weiterhin weist das Winkelelement 4 beziehungsweise das Winkelblech 7 einen dritten Schenkel 17 auf, der als Seitenschenkel 18 ausgebildet und an dem zweiten Schenkel 6 angeordnet ist. Wobei der Seitenschenkel 18 dabei im Wesentlichen senkrecht zu dem ersten Schenkel 5 sowie zu dem zweiten Schenkel 6 ausgerichtet ist. Vorteilhafterweise sind auch in dem Seitenschenkel 18 zwei Öffnungen 16 langlochartig ausgebildet.

So kann bei der Verwendung des vorteilhaften Befestigungselements 1 gemäß dem Ausführungsbeispiel der Figur 4 der Benutzer bei der Montage entscheiden, wie er die Rohrbefestigung 8 beziehungsweise die Ausnehmung 9 an dem Gegenstand ausrichten möchte. Auch ist es denkbar, das derart ausgebildete Winkelelement 4 in der Ecke zwischen zwei im Wesentlichen senkrecht zueinander ausgerichteten Gegenständen mittels des zweiten Schenkels 6 und des Seitenschenkels 18 zu befestigen.

Natürlich kann der Seitenschenkel 18 auch auf der gegenüberliegenden Seite des zweiten Schenkels 6 angeordnet sein. Ebenso ist es denkbar, dass der Seitenschenkel 18 nicht auf der gleichen Seite des zweiten Schenkels 6 sondern auf der dem ersten Schenkel 5 gegenüberliegenden Seite des zweiten Schenkels 6, also um 180° gedreht beziehungsweise nach unten gebogen, angeordnet beziehungsweise ausgerichtet ist.

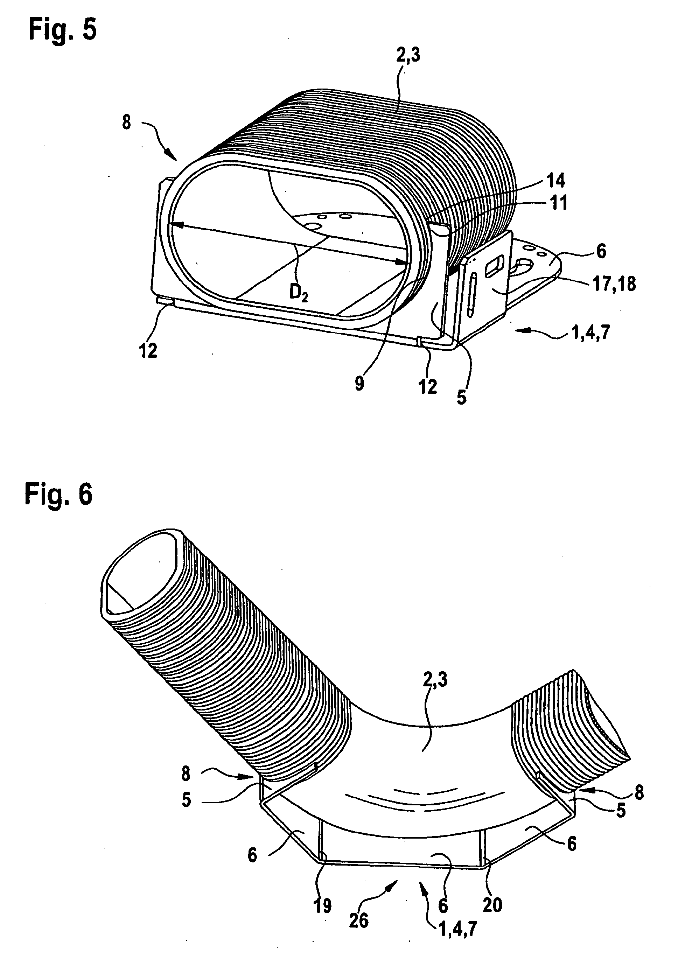

Natürlich ist die Erfindung nicht auf die Befestigung von - im Querschnitt gesehen - kreisförmigen Rohren beschränkt. Vielmehr können beispielsweise auch elliptische oder ovale Rohre mittels des Befestigungselements 1 befestigt werden. Die Figur 5 zeigt dazu das Wellrohr 3, das nunmehr ovalartig ausgebildet ist. Wobei das Rohr 2 beziehungsweise Wellrohr 3 in diesem Fall zwei gegenüberliegende halbkreisförmige Bereiche sowie zwei dazwischen parallel zueinander verlaufende gerade Bereiche aufweist und somit ein - im Querschnitt gesehen - gestrecktes Oval bildet. Entsprechend ist die randoffene Ausnehmung 9 des Winkelelements 4 ovalartig ausgebildet, wobei der Durchmesser D₂ des ovalen Wellrohres 3 im Wellenzwischenraum 14 jeweils im Wesentlichen dem Durchmesser der ovalförmigen Ausnehmung 9 entspricht. Der Mittelpunkt des Querschnitts des Wellrohres 3 beziehungsweise der Ausnehmung 9 liegt dabei ebenfalls innerhalb des Schenkels 5, sodass die Ausnehmung 9 wiederum den das Wellrohr 3 hintergreifenden Hinterschnitt 11 aufweist.

Das ovalförmige Wellrohr 3 kann ebenfalls wie oben beschrieben seitwärts beziehungsweise radial in die randoffene Ausnehmung 9 eingebracht beziehungsweise unter elastischer Verformung eingeklipst werden. Es ist ersichtlich, dass dieses Prinzip für jegliche Querschnittsformen von Wellrohren beziehungsweise Rohren und Ausnehmungen möglich ist. Voraussetzung ist jeweils dass das Wellrohr von einem Hinterschnitt der Ausnehmung hintergriffen wird.

Die Figur 6 zeigt in einer weiteren perspektivischen Darstellung eine weitere vorteilhafte Ausführungsform des Befestigungselements 1. Hierbei weist das Befestigungselement 1 zwei der aus dem vorhergehenden Ausführungsbeispiel bekannten Schenkel 5 auf, die jeweils an einem gegenüberliegenden Ende des Schenkels 6 angeordnet sind, wobei der Schenkel 6 zwei Biegekanten 19, 20 aufweist und derart an diesen Biegestellen gebogen ist, dass die beiden Schenkel 5 im Wesentlichen senkrecht zueinander ausgerichtet sind, sodass das in diesem Fall ovalförmige Wellrohr 3 in einen rechten Winkel gebogen in dem Befestigungselement 1 gehalten ist. Das Einklipsen des Wellrohres 3 geschieht dabei wie oben beschrieben. Natürlich kann auf dieser Art und Weise jede erdenkliche Biegung beziehungsweise Verwinkelung des Wellrohres 3 erreicht werden. Ein derartig geformtes Befestigungselement ist besonders hilfreich, wenn das Wellrohr 3 beispielsweise um eine Wandecke herum oder von einer Decke zu einer Wand überführt werden muss.

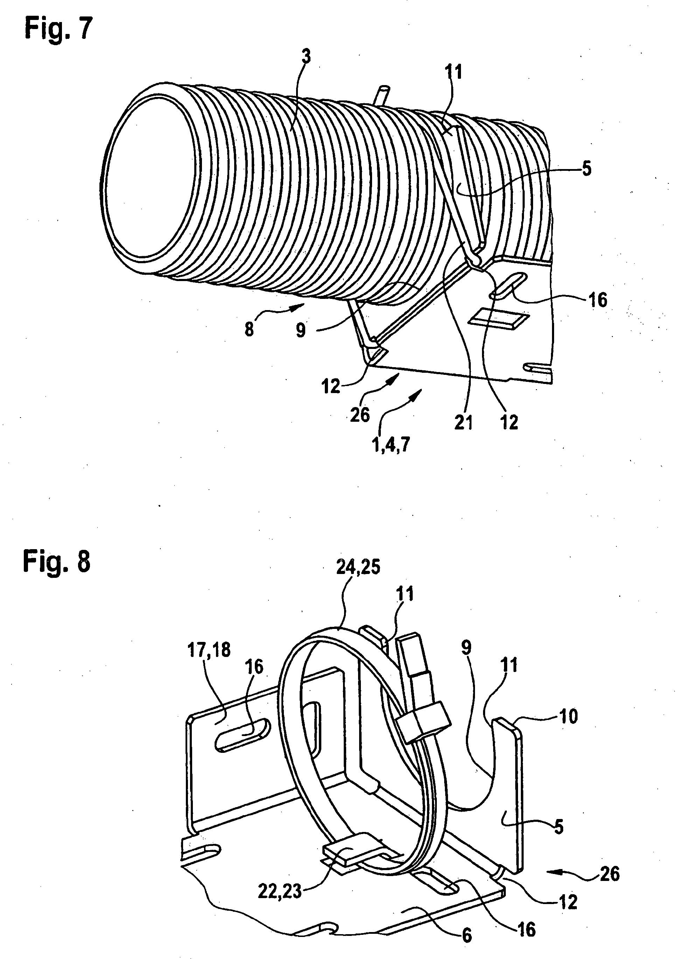

Die Figur 7 zeigt in einer perspektivischen Darstellung das aus der Figur 4 bekannte Befestigungselement 1 mit dem in die Rohrbefestigung 8 eingeklipsten Wellrohr 3. Zusätzlich weist das Befestigungselement 1 ein schlaufenförmiges Haltemittel 21 auf, das als Schnur oder Draht ausgebildet ist, und das das Wellrohr 3 sowie den Schenkel 5 umgreift. Dazu liegt es in den beidseitigen Einkerbungen 12 des Winkelelements 4 und in einem Wellenzwischenraum 14 des Wellrohres 3 ein. Mittels des Haltemittels 21 kann so das Wellrohr 3 dauerhaft an dem Befestigungselement 1 arretiert werden. Dies ist insbesondere dann interessant, wenn beispielsweise eine besonders starke Belastung des Wellrohres 3 zu erwarten ist. Das Haltemittel 21 dient dann als zusätzliche Sicherung zu der klipsartigen Rohrbefestigung 8. Natürlich kann dieses zusätzliche Haltemittel 21 auch bei einem eine glatte Mantelfläche aufweisenden Rohr vorgesehen werden.

Die Figur 8 zeigt ebenfalls das aus der Figur 4 bekannte Befestigungselement 1 mit einer zusätzlich darin ausgeformten Befestigungslasche 22. Die Befestigungslasche 22 ist in dem Schenkel 6 als freigeschnittene und herausgebogene Befestigungszunge 23, insbesondere Blechzunge, ausgebildet. Die Befestigungszunge 23 ist dabei nahe zu dem Schenkel 5 angeordnet und von dem Schenkel 5 wegweisend ausgerichtet. Zwischen der Befestigungszunge 23 und dem Schenkel 6 liegt ein Kabelbinder 24 ein, der wiederum ein schlaufenförmiges Haltemittel 25 bildet. Bei der Montage des Wellrohres 3 an dem so dargestellten Befestigungselement 1 wird der Kabelbinder 24 zunächst natürlich offen unter die Befestigungslasche 22 geschoben beziehungsweise durch diese hindurchgezogen, anschließend wird das Wellrohr 3 in die Rohrbefestigung 8 beziehungsweise in die randoffene Ausnehmung 9 radial eingeklipst und erst dann wird der Kabelbinder um das Wellrohr 3 herum geschlossen. Natürlich können die Haltemittel 21 und 25 auch kombiniert werden. Ebenso kann die Befestigungslasche 22 sowie der Kabelbinder 24 und/oder das Haltemittel 21 an dem Befestigungselement 1 aus den Figuren 5 und 6 vorgesehen sein.

Die unterschiedlichen Ausführungsformen des Befestigungselements 1 gemäß den vorangehenden Figuren 1 bis 8 haben gemeinsam, dass das Befestigungselement 1 jeweils auf einfache Art und Weise herstellbar ist. Besonders bevorzugt ist es als ein Stanz-Biege-Teil 26 ausgebildet, sodass es in nur wenigen Arbeitsschritten, bei dem beispielsweise ein Stanzen und Biegen auch gleichzeitig vorgenommen werden kann, geformt.

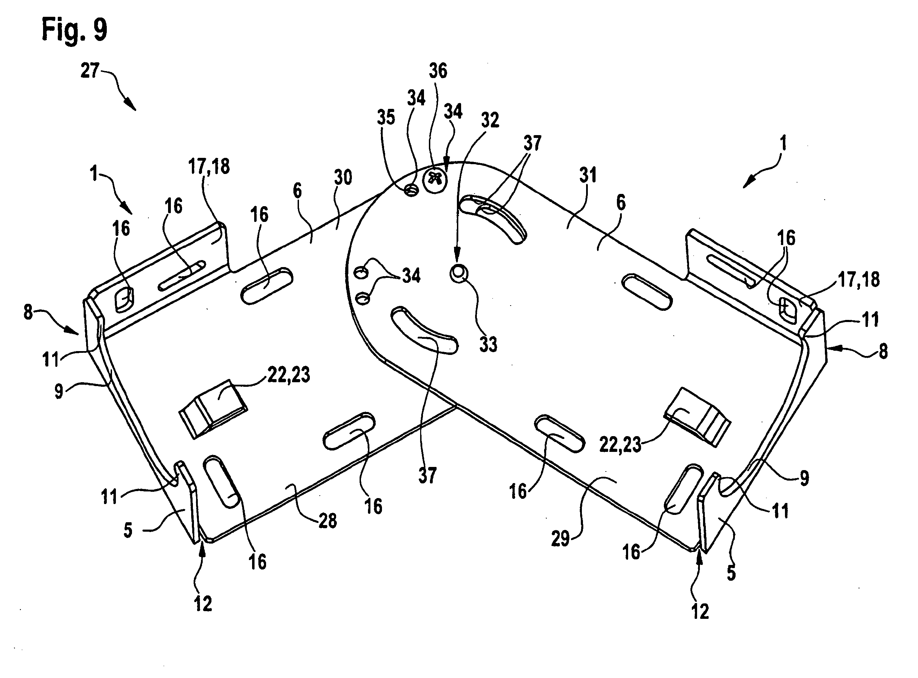

Die Figur 9 zeigt in einer perspektivischen Darstellung ein erstes Ausführungsbeispiel einer erfindungsgemäßen Vorrichtung 27 zum Befestigen eines flexiblen Rohres. Die Vorrichtung 27 weist zwei Befestigungselemente 28 und 29 auf, die im Wesentlichen dem in der Figur 8 dargestellten Befestigungselement 1 entsprechen, wobei gleiche Elemente mit denselben Bezugszeichen versehen sind, sodass insofern auf die Beschreibung zu den oben stehenden Figuren verwiesen wird.

Die Befestigungselemente 28 und 29 weisen jeweils einen verlängerten Schenkel 30, 31 auf, die im Wesentlichen dem Schenkel 6 entsprechen, und die an ihrem freien Ende, also dem die Ausnehmungen 9 aufweisenden Schenkel 5 gegenüberliegenden Ende, übereinander liegend angeordnet und drehgelenkig miteinander verbunden sind. Dabei liegt das Befestigungselement 29 mit seinem Schenkel 31 bereichsweise auf dem Schenkel 30 des Befestigungselements 28 auf. Die beiden Schenkel 31 und 30 sind dabei mittels eines Drehgelenks 32 miteinander verbunden, wobei das Drehgelenk 32 von einer die Schenkel 30 und 31 miteinander verbindenden Blindniete 33 gebildet wird. Beide Schenkel 30, 31 weisen mehrere Einstellschraubenöffnungen 34 beziehungsweise 35 auf, die auf einem gedachten koaxialen Kreis um die Drehachse des Drehgelenks 32 herum verteilt angeordnet sind. Durch Verdrehen der Befestigungselemente 28 und 29 zueinander, können somit zumindest zwei Einstellschraubenöffnungen 34, 35 der Schenkel 30 und 31 in zumindest einer Winkelstellung der Schenkel 30 und 31 zueinander in eine Überlappungsposition gebracht werden, sodass eine Einstellschraube 36 in die zwei miteinander fluchtenden Einstellschraubenöffnungen 34, 35 eingebracht werden kann. Vorteilhafterweise weist dabei die unten liegende Einstellschraubenöffnung 35 ein Gewinde auf, in das die Einstellschraube 36 eingeschraubt werden kann, sodass eine sichere Verbindung der Schenkel 30 und 31 beziehungsweise der Befestigungselemente 28 und 29 in einer gewünschten Winkelposition zueinander gewährleistet ist. Das oben liegende Befestigungselement 29 kann eine einzige Einstellschraubenöffnung 34 aufweisen. Dies würde prinzipiell ausreichen, sofern das unten liegende Befestigungselement 28 mehrere auf dem Radius verteilt angeordnete Einstellschraubenöffnungen 34 aufweisen würde. Vorteilhafterweise weist jedoch das oben liegende Befestigungselement 29 in seinem Schenkel 31, wie dargestellt, zwei Einstellschraubenöffnungen 34 auf, wobei in einer von ihnen die Einstellschraube 36 eingebracht ist. Die Einstellschraubenöffnungen 34, 35 weisen jeweils den gleichen Abstand zu einer benachbarten Einstellschraubenöffnung 34 auf, sind also gleichmäßig verteilt angeordnet. Dadurch wird erreicht, dass wenn die beiden Schenkel 31 und 30 übereinander liegen, die zweite Einstellschraubenöffnung 34 des oben liegenden Schenkels 31 als Justierhilfe verwendet werden kann. Ist nämlich mittels der zweiten Einstellschraubenöffnung 34 zu erkennen, dass diese fluchtend zu einer darunter liegenden Einstellschraubenöffnung 35 des Schenkels 30 liegt, so kann davon ausgegangen werden, dass auch die dazu benachbarte Einstellschraubenöffnung 34, in der die Einstellschraube 36 bereits einliegt, fluchtend zu einer darunter liegenden Einstellschraubenöffnung 35 des Schenkels 30 ausgerichtet ist und somit ein Festziehen der Schraube 25 möglich ist. In dem in der Figur 9 dargestellten Ausführungsbeispiel sind an dem Schenkel 31 neben den soeben beschriebenen Einstellschraubenöffnungen 34 noch zwei weitere Einstellschraubenöffnungen 34 ausgebildet, die in einem Winkel von etwa 45° zu den oben beschriebenen angeordnet sind.

Weiterhin weisen die Schenkel 30 und 31 jeweils mindestens eine langlochartig ausgebildete Öffnung 37 für eine Schraube oder dergleichen auf, die sich zu den Öffnungen 16 dahingehend unterscheiden, dass sie bogenförmig auf einem Kreis koaxial zu der Drehachse 33 verlaufen, sodass auch sie in zumindest einer Winkelstellung der Schenkel 30 und 31 zueinander zumindest bereichsweise miteinander fluchten beziehungsweise sich überschneiden.

Bevorzugt weisen die Schenkel 30 und 31 an ihren freien Enden, wie dargestellt, eine halbkreisförmige Rundung auf, die es erlaubt, die Vorrichtung 27 bei jeder Winkelstellung der Befestigungselemente 28 und 29 zueinander in einer Ecke des Gegenstandes (Wand oder dergleichen) zu befestigen. So kann die Vorrichtung 27 beispielsweise mittels den in den Schenkeln 30, 31 ausgebildeten Öffnungen 16 an einer Wand oder dergleichen befestigt werden. Alternativ kann die Vorrichtung 27 mit den in den Seitenschenkeln 18 ausgebildeten Öffnung 16 an dem Gegenstand, insbesondere beim Übergang von einer Wand zu einer Decke, befestigt werden. Vorteilhafterweise sind dazu die Seitenschenkel 18 auf der gleichen Seite der Vorrichtung 27 angeordnet, wie dargestellt.

Die Vorrichtung 27 erlaubt auf besonders einfache Art und Weise das Einstellen eines Biegewinkels eines Rohres beziehungsweise Wellrohres. Dabei wird zunächst die Vorrichtung 27 an dem Gegenstand angebracht, in dem gewünschten Winkel, und anschließend das Rohr auf einfache Art und Weise in die beiden Rohrbefestigungen 8 nach einander oder gleichzeitig eingeklipst. Aufgrund der vorteilhaften, oben beschriebenen Axialsicherung, bleibt die Biegung in dem Rohr, beziehungsweise Wellrohr, stets erhalten.

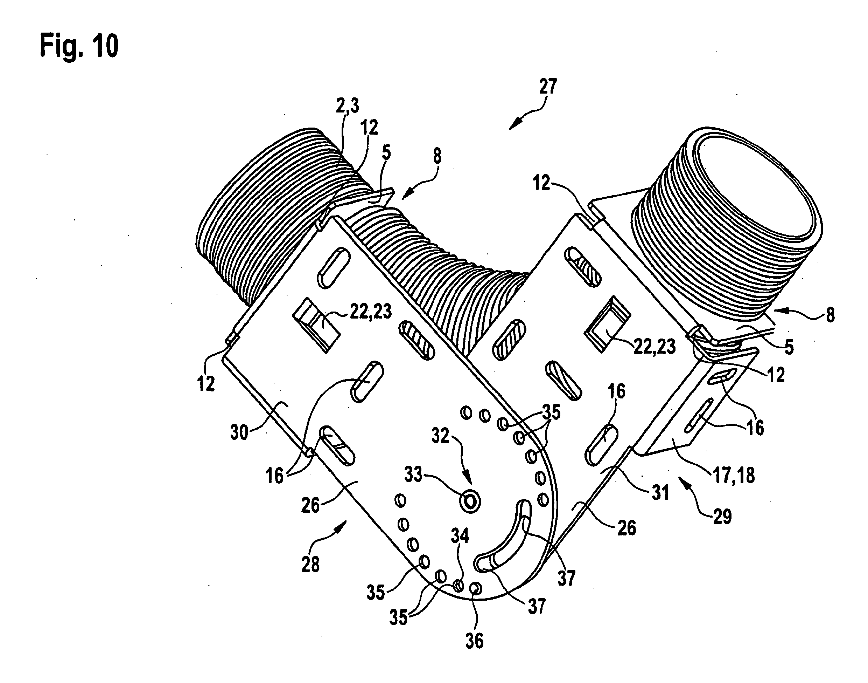

Die Figur 10 zeigt die Rückseite der Vorrichtung 27 in einer perspektivischen Darstellung, wobei das Wellrohr in die Rohrbefestigungen 8 Befestigungselemente 28 und 29 eingeklipst ist, sodass der jeweilige Hinterschnitt 11 das Wellrohr 3 in einem Wellenzwischenraumhintergreift. Die Darstellung der Rückseite der Vorrichtung 27 zeigt die vorteilhafte Ausbildung des unten liegenden Schenkels 30 mit einer Vielzahl von Einstellschraubenöffnungen 35, die im Wesentlichen gleichmäßig beabstandet zueinander auf einem (gedachten) Kreis zu der Drehachse des Drehgelenks 32 angeordnet sind und somit eine vielseitige Einstellung der Vorrichtung 27 erlauben. Insbesondere können so unterschiedlichste Winkel zwischen den Schenkeln 30 und 31 realisiert werden. Alternativ dazu ist auch eine einstückige Ausbildung der Vorrichtung 27 in einem vorbestimmten Winkel der Schenkel 30 und 31 zueinander denkbar. Auch ist es denkbar, an den freien Enden der Schenkel 30 und 31 Mittel zum Zusammenstecken der Befestigungselemente 28 und 29 vorzusehen, die ein Zusammenstecken der Befestigungselemente 28 und 29 in einem oder in mehreren unterschiedlichen Winkeln zueinander erlauben.

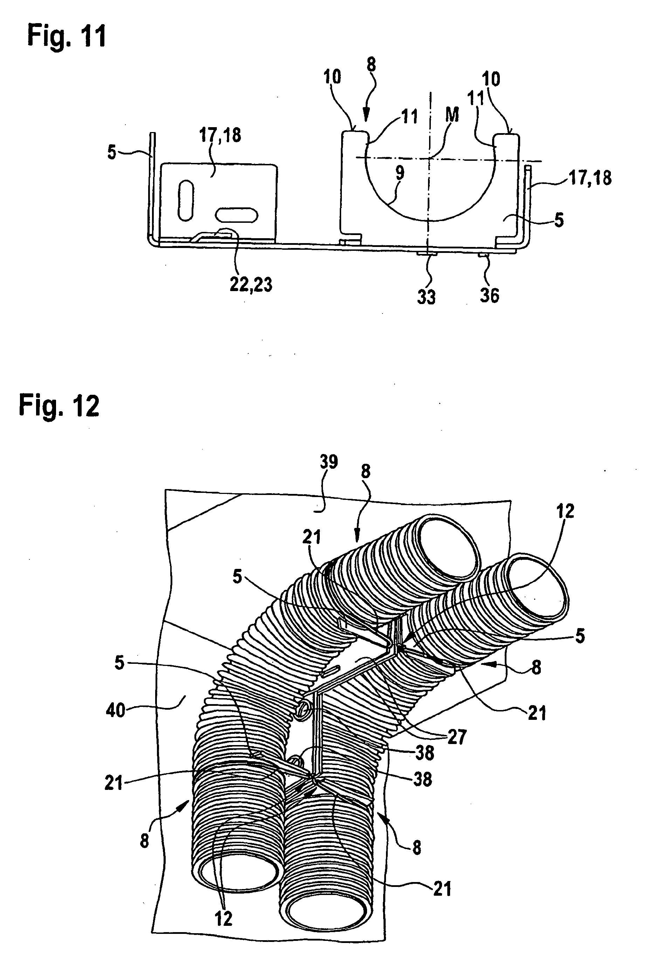

Die Figur 11 zeigt eine Draufsicht auf den Schenkel 5 des oben liegenden Befestigungselements 29 der Vorrichtung 27, wie sie in der Figur 11 dargestellt ist, wobei die Befestigungselemente 28 und 29 senkrecht zueinander ausgerichtet sind. In dieser Darstellung ist besonders gut die kreisförmige Ausbildung der randoffenen Ausnehmung 9 in dem Schenkel 5 zu erkennen. Da der Mittelpunkt der kreisförmigen Ausnehmung 9 innerhalb des Schenkels 5 liegt, wird der Hinterschnitt 11, wie oben bereits beschrieben, realisiert, der zum Hintergreifen des Rohres 2 beziehungsweise Wellrohres 3 dient, beziehungsweise das Einklipsen des Wellrohres 3 in die Befestigung 8 erlaubt.

In der Figur 12 ist perspektivisch ein vorteilhaftes Anwendungsbeispiel für die Vorrichtung 27 dargestellt. Dazu zeigt Figur 12 ein Ausführungsbeispiel eines vorteilhaften Leitungssystems 41, bei dem zwei der Vorrichtungen 27 rückseitig aneinander liegend mittels Schraubverbindungen 38 miteinander verbunden und mittels den Seitenschenkeln 18 an zwei im Wesentlichen senkrecht zueinander ausgerichteten Gegenständen, wie zum Beispiel einer Decke 39 und einer Wand 40 eines Gebäudes befestigt sind. In die Rohrbefestigungen 8 der Vorrichtungen 27 sind zwei Wellrohre 3, wie sie oben bereits beschrieben wurden, eingeklipst. Zusätzlich ist jedes der Wellrohre 3 an der entsprechenden Rohrbefestigung 8 mittels des schlaufenförmigen Haltemittels 21 gesichert, die in den beidseitigen Einkerbungen 12 einliegen. Die vorteilhafte Vorrichtung erlaubt also auf einfache Art und Weise auch das Montieren von zwei parallel verlaufenden Wellrohren 3.

Das Leitungssystem 41 kann alternativ oder zusätzlich ebenso von Befestigungselementen 1, wie sie in den Figuren 1 bis 8 beschrieben wurden, gebildet beziehungsweise ergänzt werden.

Vorteilhafterweise ist das Leitungssystem 41 zur Befestigung von Wellrohren/Rohren mit einem Durchmesser von 63 mm, 75 mm oder 90 mm ausgebildet. Alternativ zur Ausbildung als Biege-Stanz-Teil beziehungsweise Blech-Stanz-Teil ist natürlich auch eine Fertigung der Befestigungselemente aus anderen Materialien, wie zum Beispiel aus Kunststoff möglich. Bei Verwendung der Vorrichtung 27 kann der gewünschte Winkel vor oder auch nach Einklipsen des Wellrohres eingestellt oder nachjustiert werden. Natürlich kann die Vorrichtung 27 auch derart ausgerichtet werden, dass das Rohr gerade geführt wird, sodass also ein Winkel von 180° zwischen den Befestigungselementen 28 und 29 vorliegt.

## Patentansprüche

1. Vorrichtung zum Befestigen eines flexiblen Rohres (2), insbesondere Wellrohres, an einem Gegenstand, insbesondere einer Wand, Decke oder dergleichen, mit mindestens zwei Befestigungselementen (28,29), wobei jedes Befestigungselement (28,29) zum Befestigen des Rohres (2) als mindestens einen ersten und einen zweiten Schenkel (5,6,17,30,31) aufweisendes Winkelelement (4) ausgebildet ist und eine Rohrbefestigung (8) aufweist, wobei die Rohrbefestigung (8) als randoffene Ausnehmung (9) mit einem ein Hintergreifen des Durchmessers des Rohres (2) ermöglichenden Hinterschnitt (11) in dem ersten Schenkel (5) ausgebildet ist, und wobei der erste Schenkel (5) eben ausgebildet ist und senkrecht oder im Wesentlichen senkrecht zu dem zweiten, ebenfalls eben ausgebildeten Schenkel (6,30, 31) angeordnet ist, **dadurch gekennzeichnet, dass** die mindestens zwei Befestigungselemente (28, 29) mittels eines Drehgelenks (32) drehgelenkig miteinander verbunden sind.

2. Vorrichtung nach Anspruch 1, **gekennzeichnet durch** einen dritten Schenkel (17), der als Seitenschenkel (18) ausgebildet ist und mindestens eine Öffnung (16) für eine Schraube oder dergleichen aufweist.

3. Vorrichtung nach einem der vorhergehenden Ansprüche, **dadurch gekennzeichnet, dass** das Winkelelement (4) mindestens eine beidseitige Einkerbung (12), insbesondere im Biegebereich zwischen dem ersten und dem zweiten Schenkel (5,6,30), für ein das Rohr (2) umgreifendes schlaufenförmiges Haltemittel (21) aufweist.

4. Vorrichtung nach einem der vorhergehenden Ansprüche, **dadurch gekennzeichnet, dass** an dem zweiten Schenkel (6,30,31) wenigstens eine Befestigungslasche (21) für ein schlaufenförmiges Haltemittel (25), insbesondere ein Kabelbinder (24) oder dergleichen, angeordnet ist.

5. Vorrichtung nach einem der vorhergehenden Ansprüche, **dadurch gekennzeichnet, dass** an einem dem Schenkel (5) gegenüberliegenden Ende des zweiten Schenkels (6,30,31) ein vierter Schenkel (5), der dem ersten Schenkel (5) entspricht, angeordnet ist.

6. Vorrichtung nach einem der vorhergehenden Ansprüche, **dadurch gekennzeichnet, dass** der zweite Schenkel (6,30,31) zumindest bereichsweise derart gebogen ist, dass der erste und der vierte Schenkel (5) in einem Winkel, insbesondere senkrecht zueinander, ausgerichtet sind.

7. Vorrichtung nach Anspruch 1, **dadurch gekennzeichnet, dass** das Drehgelenk (32) an einem dem jeweiligen ersten Schenkel (5) gegenüberliegenden Ende des zweiten Schenkels (6,30,31) angeordnet ist.

8. Vorrichtung nach einem der vorhergehenden Ansprüche, **dadurch gekennzeichnet, dass** jeder der zweiten Schenkel (30,31) mindestens eine Einstellschraubenöffnung (34,35) auf einem koaxial zur Drehachse des Drehgelenks (32) angeordneten Kreis aufweist.

9. Vorrichtung nach einem der vorhergehenden Ansprüche, **dadurch gekennzeichnet, dass** wenigstens einer der Schenkel (30,31) mehrere auf dem Kreis verteilt angeordnete Einstellschraubenöffnungen (34,35) aufweist.

10. Vorrichtung nach einem der vorhergehenden Ansprüche, **dadurch gekennzeichnet, dass** zum Einstellen eines bestimmten Winkels zwischen den Befestigungselementen (28,29) eine Einstellschraube (36) oder ein Einstellstift in jeweils eine Einstellschraubenöffnung (34,35) der aufeinander liegenden Schenkel (30,31) eingebracht ist.

11. Vorrichtung nach einem der vorhergehenden Ansprüche, **dadurch gekennzeichnet, dass** der oben liegende zweite Schenkel (31) zwei Einstellschraubenöffnungen und der unten liegende zweite Schenkel (30) eine Vielzahl von Einstellschraubenöffnungen (35) aufweist.

12. Vorrichtung nach einem der vorhergehenden Ansprüche, **dadurch gekennzeichnet, dass** die Seitenschenkel (18) der Befestigungselemente (28,29) auf derselben Seite der Vorrichtung (27) angeordnet sind.

13. Leitungssystem für flüssige und/oder gasförmige Stoffe, insbesondere Lüftungssystem, mit mindestens einem flexiblen Rohr und mindestens einer Vorrichtung zum Befestigen des Rohres an einem Gegenstand, insbesondere einer Wand, einer Decke oder dergleichen, nach einem oder mehreren der vorhergehenden Ansprüche.

14. Leitungssystem nach Anspruch 13, **dadurch gekennzeichnet, dass** der Durchmesser (D₁) der Ausnehmung (9) im Wesentlichen so groß wie der Durchmesser (D₂) des Wellenzwischenraums (14) ist.

15. Verfahren zur Montage eines flexiblen Rohres, insbesondere Wellrohres, an einem Gegenstand, insbesondere einer Wand, Decke oder dergleichen, mittels einer Vorrichtung nach einem oder mehreren der vorhergehenden Ansprüche, **dadurch gekennzeichnet, dass** das Rohr im Wesentlichen radial in die Ausnehmung unter elastischer Verformung des Rohrquerschnitts eingebracht wird, sodass sich das vollständig in die Ausnehmung eingebrachte Rohr aufgrund seiner Eigenelastizität zumindest im Wesentlichen in seine Ausgangsform zurück verformt und **dadurch** der Hinterschnitt der Ausnehmung den Durchmesser des Rohres hintergreift.

## Claims

1. A device for mounting a flexible pipe (2), more particularly a corrugated pipe, to an object, more particularly a wall, a ceiling or the like, having at least two mounting elements (28, 29), wherein, to mount the pipe (2), each mounting element (28, 29) is designed as an angle bracket element (4) that includes at least one first leg and one second leg (5, 6, 17, 30, 31) and includes a pipe mounting piece (8), wherein the pipe mounting piece (8) is designed as an edge-open recess (9) with an undercut (11) in the first leg (5), wherein said undercut (11) allows engaging behind the diameter of the pipe (2), and wherein the first leg (5) is formed flat and is arranged perpendicularly or essentially perpendicularly in relation to the second leg (6, 30, 31) which is likewise formed flat, **characterized in that** the at least two mounting elements (28, 29) are connected to each other in a pivoting manner by means of a swivel joint (32).

2. Device according to claim 1, **characterized by** a third leg (17) that is designed as a lateral leg (18) and includes at least one hole (16) for a screw or the like.

3. Device according to any one of the preceding claims, **characterized in that** the angle bracket element (4) includes at least one indentation (12) on either side, more particularly in the bending region between the first and the second legs (5, 6, 30) for a loop-shaped holding means (21) encompassing the pipe (2).

4. Device according to any one of the preceding claims, **characterized in that** at least one mounting strap (21) for a loop-shaped holding means (25), more particularly a cable tie (24) or the like, is arranged at the second leg (6, 30,31).

5. Device according to any one of the preceding claims, **characterized in that** a fourth leg (5), which corresponds to the first leg (5), is arranged at an end of the second leg (6, 30, 31), said end being disposed opposite to the leg (5).

6. Device according to any one of the preceding claims, **characterized in that** the second leg (6, 30, 31) is bent at least in certain regions in such a way that the first and the fourth legs (5) are oriented at an angle, more particularly vertically in relation to each other.

7. Device according to Claim 1, **characterized in that** the swivel joint (32) is arranged at an end of the second leg (6, 30, 31), said end being disposed opposite to the respective first leg (5).

8. Device according to any one of the preceding claims, **characterized in that** each of the second legs (30, 31) includes at least one setting screw hole (34, 35) on a circle that is arranged coaxially in relation to the rotational axis of the swivel joint (32).

9. Device according to any one of the preceding claims, **characterized in that** at least one of the legs (30, 31) includes a plurality of setting screw holes (34, 35) that are arranged distributed along the circle.

10. Device according to any one of the preceding claims, **characterized in that**, to adjust a certain angle between the mounting elements (28, 29), a setting screw (36) or a setting pin is inserted into a setting screw hole (34, 35) of each of the legs (30, 31) that are disposed on top of each other.

11. Device according to any one of the preceding claims, **characterized in that** the second leg (31) that is disposed at the top includes two setting screw holes and the second leg (30) that is disposed at the bottom includes a plurality of setting screw holes (35).

12. Device according to any one of the preceding claims, **characterized in that** the lateral legs (18) of the mounting elements (28, 29) are arranged on the same side of the device (27).

13. A line system for liquid and/or gaseous materials, more particularly a ventilation system, having at least one flexible pipe and at least one device for mounting the pipe to an object, more particularly a wall, a ceiling or the like, according to any one or a plurality of the preceding claims.

14. Line system according to Claim 13, **characterized in that** the diameter (D₁) of the recess (9) is, in essence, as large as the diameter (D₂) of the intermediate space (14) between the corrugations.

15. A method for mounting a flexible pipe, more particularly a corrugated pipe, to an object, more particularly a wall, a ceiling or the like, by means of a device according to any one or a plurality of the preceding claims, **characterized in that** the pipe is, in essence, introduced radially into the recess with the pipe cross-section being deformed elastically, with the result that, due to its own elasticity, the pipe that has been fully introduced into the recess deforms back to its original shape at least in essence and, thereby, the undercut of the recess engages behind the diameter of the pipe.

## Revendications

1. Dispositif destiné à la fixation d'un tuyau flexible (2), en particulier d'un tuyau ondulé, sur un objet, en particulier un mur, un plafond ou similaire, comprenant au moins deux éléments de fixation (28, 29), dans lequel chaque élément de fixation (28, 29) pour fixer le tuyau (2) est conçu en tant qu'élément d'angle (4) présentant au moins une première et une deuxième branche (5, 6, 17, 30, 31) et présente une fixation de tuyau (8) sachant que la fixation de tuyau (8) est conçue dans la première branche (5) en tant qu'évidement à bords ouverts (9) avec une contre-dépouille (11) permettant de mettre en prise par l'arrière le diamètre du tuyau (2) et dans lequel la première branche (5) est conçue plane et est disposée perpendiculairement ou essentiellement perpendiculairement à la deuxième branche (6, 30, 31) également conçue plane, **caractérisé en ce que** les au moins deux éléments de fixation (28, 29) sont reliés entre eux en articulation de rotation au moyen d'une articulation rotative (32).

2. Dispositif selon la revendication 1, **caractérisé par** une troisième branche (17) qui est conçue en tant que branche latérale (18) et présente au moins une ouverture (16) pour une vis ou similaire.

3. Dispositif selon l'une des revendications précédentes, **caractérisé en ce que** l'élément d'angle (4) présente au moins une encoche des deux côtés (12), en particulier dans la zone de cintrage entre la première et la deuxième branche (5, 6, 30), pour un moyen de retenue (21) en forme de passant entourant le tuyau (2).

4. Dispositif selon l'une des revendications précédentes, **caractérisé en ce qu'**au moins une bride de fixation (21) pour un moyen de retenue (25) en forme de passant, en particulier un pince-câble (24) ou similaire, est disposé(e) sur la deuxième branche (6, 30,31).

5. Dispositif selon l'une des revendications précédentes, **caractérisé en ce qu'**une quatrième branche (5) qui correspond à la première branche (5) est disposée sur une extrémité de la deuxième branche (6, 30, 31) opposée à la branche (5).

6. Dispositif selon l'une des revendications précédentes, **caractérisé en ce que** la deuxième branche (6, 30, 31) est cintrée au moins par endroits de telle façon que la première et la quatrième branche (5) sont alignées dans un angle, en particulier perpendiculairement l'une à l'autre.

7. Dispositif selon la revendication 1, **caractérisé en ce que** l'articulation rotative (32) est disposée sur une extrémité de la deuxième branche (6, 30, 31) opposée à la première branche (5) respective.

8. Dispositif selon l'une des revendications précédentes, **caractérisé en ce que** chacune des deuxièmes branches (30, 31) présente au moins une ouverture de vis de réglage (34, 35) sur un cercle disposé coaxialement au pivot de l'articulation rotative (32).

9. Dispositif selon l'une des revendications précédentes, **caractérisé en ce qu'**au moins une des branches (30, 31) présente plusieurs ouvertures de vis de réglage (34, 35) disposées en étant réparties sur le cercle.

10. Dispositif selon l'une des revendications précédentes, **caractérisé en ce que** pour régler un angle déterminé entre les éléments de fixation (28, 29), une vis de réglage (36) ou une tige de réglage est insérée dans respectivement une ouverture de vis de réglage (34, 35) des branches (30, 31) reposant l'une sur l'autre.

11. Dispositif selon l'une des revendications précédentes, **caractérisé en ce que** la deuxième branche (31) reposant au-dessus présente deux ouvertures de vis de réglage et la deuxième branche reposant au-dessous (30) présente une pluralité d'ouvertures de vis de réglage (35).

12. Dispositif selon l'une des revendications précédentes, **caractérisé en ce que** les branches latérales (18) des éléments de fixation (28, 29) sont disposées sur le même côté du dispositif (27).

13. Système de conduites pour substances liquides et/ou gazeuses, en particulier, système de ventilation comprenant au moins un tuyau flexible et au moins un dispositif pour fixer le tuyau sur un objet, en particulier un mur, un plafond ou similaire, selon l'une ou plusieurs des revendications précédentes.

14. Système de conduites selon la revendication 13, **caractérisé en ce que** le diamètre (D₁) de l'évidement (9) est essentiellement aussi grand que le diamètre (D₂) de l'espace entre les ondulations (14).

15. Procédé de montage d'un tuyau flexible, en particulier d'un tuyau ondulé, sur un objet, en particulier un mur, un plafond ou similaire, au moyen d'un dispositif selon l'une ou plusieurs des revendications précédentes, **caractérisé en ce que** le tuyau est inséré essentiellement radialement dans l'évidement par déformation élastique de la section du tuyau, de sorte que le tuyau inséré totalement dans l'évidement reprend au moins essentiellement sa forme de départ du fait de son élasticité intrinsèque, et ainsi, la contre-dépouille de l'évidement met en prise par derrière le diamètre du tuyau.
